# EUROPEAN PATENT APPLICATION

(11) **EP 4 672 397 A1**
(43) Date of publication of application: **31.12.2025**
(21) Application number: 25161627.2
(22) Date of filing: 04.03.2025
(51) Int. Cl.: H01M 10/04, H01M 10/0587, H01M 50/534, H01M 50/572

(54) **ELECTRODE AND SECONDARY BATTERY INCLUDING SAME**

(30) Priority: 25.06.2024 KR 20240082813
(71) Applicant: SAMSUNG SDI CO., LTD., Yongin-si, Gyeonggi-do 17084 (KR)
(72) Inventor: Jang, Taewoong, Yongin-Si, Gyeonggi-do 17084 (KR)
(74) Representative: Gulde & Partner

(57) **Abstract**

An electrode includes a substrate made of a metallic material, a first composite layer coated on a portion of a first surface of the substrate to form a first uncoated portion on a first end of the first surface, a second composite layer coated on a portion of a second surface of the substrate to form a second uncoated portion on a second end of the second surface, and a reinforcing film attached to a third end portion of at least one of the first composite layer or the second composite layer.

## Description

### BACKGROUND

### 1. Field

The present disclosure relates to an electrode and a secondary battery including the same.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The positive electrode and negative electrode may be manufactured by coating a substrate with a composite layer. During the manufacturing process, the composite layer may have a low-strength region (e.g., a region having strength or durability that is lower than another region of the composite layer). During the life cycle of a secondary battery, the electrodes may repeatedly contract and expand, and cracks may be formed in the low-strength region. The cracks may reduce the life of the secondary battery.

The above information disclosed in this Background section is for enhancement of understanding of the background of the present disclosure, and therefore, it may contain information that does not constitute related (or prior) art.

### SUMMARY

The invention is defined by the appended claims. The description that follows is subjected to this limitation. Any disclosure lying outside the scope of said claims is only intended for illustrative as well as comparative purposes. Embodiments of the present disclosure are directed to an electrode and a secondary battery including the same that are configured to address the problems described above.

These and other aspects and features of the present disclosure will be described in or will be apparent from the following description of embodiments of the present disclosure.

According to one or more embodiments of the present disclosure, an electrode includes: a substrate made of a metallic material; a first composite layer coated on a portion of a first surface of the substrate to form a first uncoated portion on a first end of the first surface; a second composite layer coated on a portion of a second surface of the substrate to form a second uncoated portion on a second end of the second surface; and a reinforcing film attached to a third end portion of at least one of the first composite layer or the second composite layer.

In an embodiment, a first length of the first composite layer may be greater than a second length of the second composite layer, and the reinforcing film may be attached to the third end portion of the second composite layer and the second uncoated portion.

In an embodiment, the reinforcing film may include: a first portion covering a first region from the third end portion of the second composite layer to a portion of the second composite layer; and a second portion covering a second region from the third end portion of the second composite layer to a portion of the second uncoated portion.

In an embodiment, a third length of the first portion may be greater than a fourth length from the third end portion of the second composite layer to a point of the second composite layer to which sheer stress greater than a threshold sheer stress may be applied during rolling of the second composite layer.

In an embodiment, a third length of the first portion may be greater than a fourth length from the third end portion of the second composite layer to a point of the second composite layer where a fatigue failure occurs first.

In an embodiment, a third length of the first portion may be in a range from approximately 0.6 mm to approximately 2.0 mm from the end portion of the second composite layer.

In an embodiment, the second surface of the substrate may include a chargeable region and non-chargeable region, and a third length of the reinforcing film may be set to cover the non-chargeable region excluding the chargeable region.

In an embodiment, a thickness of the reinforcing film ranges from approximately 15 µm to approximately 50 µm.

In an embodiment, a width of the reinforcing film may be equal to or smaller than a width of the substrate.

In an embodiment, the reinforcing film may include a thermal fusion film, and may be attached via heat and pressure.

In an embodiment, the reinforcing film may include a heat-resistant film including an adhesive layer, and may be attached by the adhesive layer.

In an embodiment, the second composite layer may be coated on the second surface of the substrate after the first composite layer may be coated on first surface of the substrate.

In an embodiment, a third length of the second uncoated portion in a longitudinal direction of the substrate may be greater than a fourth length of the first uncoated portion in the longitudinal direction of the substrate.

In an embodiment, a third length of the second uncoated portion in a longitudinal direction of the substrate may be equal to a fourth length of the first uncoated portion in the longitudinal direction of the substrate.

In an embodiment, a first portion of the second composite layer may be positioned at a center of the electrode and a second portion of the second composite layer may be positioned in a periphery of the electrode.

In an embodiment, each of the first composite layer and the second composite layer may include a positive electrode, and the substrate may include a positive electrode substrate.

According to one or more embodiments of the present disclosure, a secondary battery includes: an electrode assembly including a first electrode, a separator, and a second electrode; a case configured to accommodate the electrode assembly; and a cap assembly coupled to an open area of the case to seal the case. The first electrode may include: a substrate made of a metallic material; a first composite layer coated on a portion of a first surface of the substrate to form a first uncoated portion on a first end of the first surface; a second composite layer coated on a portion of a second surface of the substrate to form a second uncoated portion on a second end of the second surface; and a reinforcing film attached to a third end portion of at least one of the first composite layer or the second composite layer.

In an embodiment, in a wound state of the first electrode, first portions of the first composite layer and the second composite layer are positioned at a center of the electrode assembly, and second portions of the first composite layer and the second composite layer are positioned in a periphery of the electrode assembly.

In an embodiment, the second composite layer may be positioned to face the second electrode, and the reinforcing film may be attached to the third end portion of the second composite layer and to the second uncoated portion.

In an embodiment, the first composite layer and the second composite layer may include a positive electrode active material, and the substrate may include a positive electrode substrate, where the first electrode functions as a positive electrode.

According to some embodiments of the present disclosure, crack formation may be prevented or reduced by attaching a reinforcing film to a low-strength region in a composite layer.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates an example of an electrode according to embodiments of the present disclosure.
FIG. 2 illustrates an example in which a reinforcing film is attached to an electrode according to embodiments of the present disclosure.
FIG. 3 illustrates an example of a region of an electrode according to embodiments of the present disclosure in which cracks are formed.
FIG. 4 illustrates an example of an electrode according to embodiments of the present disclosure to which a reinforcing film is attached.
FIG. 5 illustrates an example of a reinforcing film according to embodiments of the present disclosure.
FIG. 6 illustrates an example of an electrode according to some embodiments of the present disclosure.
FIG. 7 illustrates an example in which a reinforcing film is attached to an electrode according to some embodiments of the present disclosure.
FIG. 8 illustrates an example in which reinforcing films are attached to opposite surfaces of an electrode according to embodiments of the present disclosure.
FIG. 9 illustrates a vertical cross-sectional view of an example secondary battery according to embodiments of the present disclosure.
FIG. 10 illustrates a horizontal cross-sectional view of the example secondary battery of FIG. 9 according to embodiments of the present disclosure.
FIG. 11 illustrates an enlarged view of an example region A in FIG. 10 according to embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

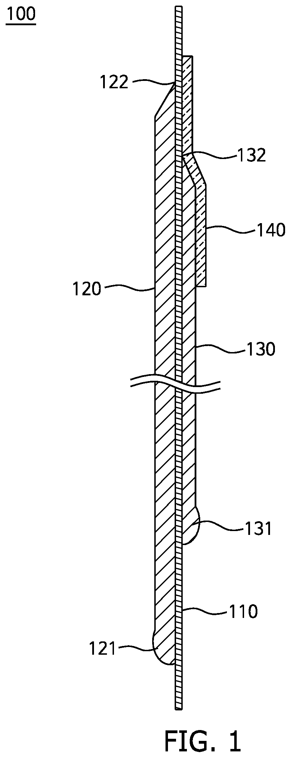

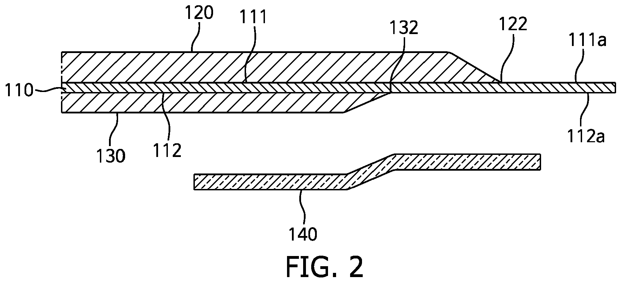

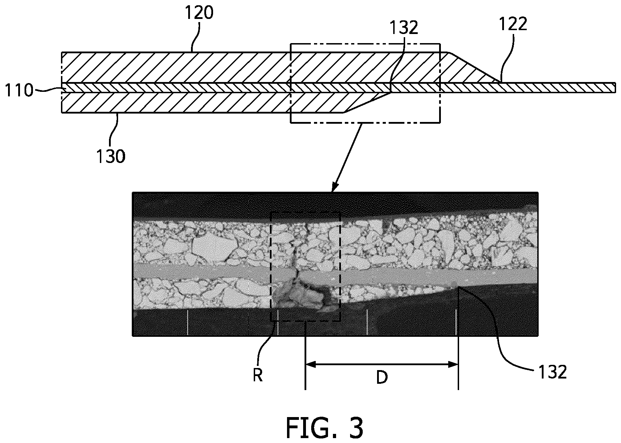

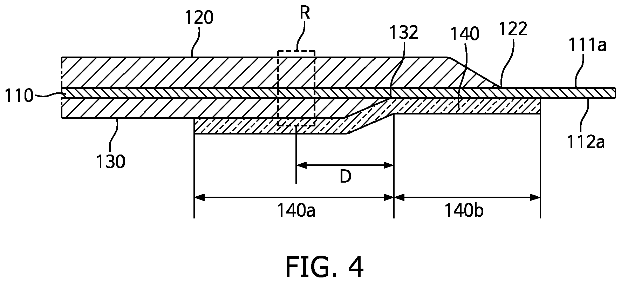

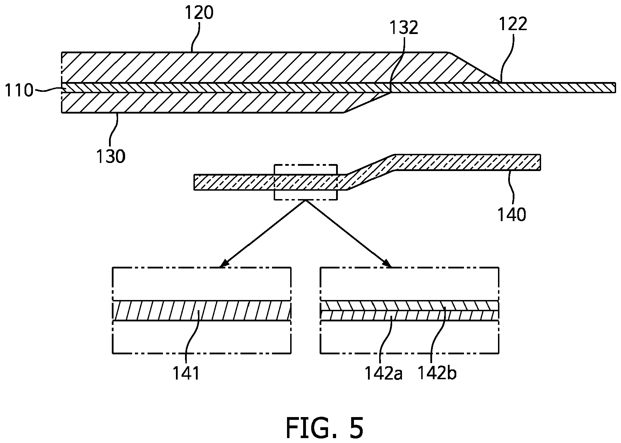

FIG. 1 illustrates an example of an electrode according to embodiments of the present disclosure, FIG. 2 illustrates an example in which a reinforcing film is attached to an electrode according to embodiments of the present disclosure, FIG. 3 illustrates an example of a region of an electrode according to embodiments of the present disclosure in which cracks are formed, FIG. 4 illustrates an example of an electrode according to embodiments of the present disclosure to which a reinforcing film is attached, and FIG. 5 illustrates an example of a reinforcing film according to embodiments of the present disclosure.

Referring to FIGS. 1 to 5, an electrode 100 according to embodiments of the present disclosure includes: a substrate 110 formed of a metallic material; a first composite layer 120 coated on a portion of a first surface 111 of the substrate 110 to form a first uncoated portion 111a on an end of the first surface 111 of the substrate 110; a second composite layer 130 coated on a portion of a second surface 112 of the substrate 110 to form a second uncoated portion 112a on an end of the second surface 112 of the substrate 110; and a reinforcing film 140 attached to an end of at least one of the first composite layer 120 or the second composite layer 130. Herein, the composite layers may also be referred to as active material layers.

The substrate 110 is a collector (or current collector) made of a metallic material, which may be constructed in the form of a plate (e.g., a thin or relatively thin plate) or a metal film. In an embodiment, the substrate 110 may be made of an aluminum foil or copper foil.

The first composite layer 120 may be formed on the first surface 111 of the substrate 110, and the second composite layer 130 may be formed on the second surface 112 of the substrate 110. The first composite layer 120 and the second composite layer 130 may be manufactured by applying electrode composites each including a binder and a coating material to the surfaces of the substrate 110, followed by drying and rolling.

According to some embodiments, the electrode composites of the first composite layer 120 and the second composite layer 130 may include the same components. For example, the electrode composites may include a positive electrode active material plus a binder and a coating material. For example, the electrode composites may include a negative electrode active material plus a binder and a coating material. In some embodiments, the electrode composites of the first composite layer 120 and the second composite layer 130 may be different. For example, the electrode composite of the first composite layer 120 may include a positive electrode active material plus a binder and a coating material, and the electrode composite forming the second composite layer 130 may include a negative electrode active material plus a binder and a coating material, or vice versa.

In an embodiment, as shown in FIG. 1, the length of the first composite layer 120 may be greater than the length of the second composite layer 130. In other words, the length of the second uncoated portion 112a in the longitudinal direction of the substrate 110 may be greater than the length of the first uncoated portion 111a in the longitudinal direction of the substrate 110.

After the first composite layer 120 is first formed on the first surface 111 of the substrate 110 by coating, the second composite layer 130 may be formed on the second surface 112 of the substrate 110 by coating. In an embodiment, an electrode composite may be applied to the first surface 111 of the substrate 110, followed by drying, and then a rolling process may be performed to flatten the first composite layer 120. In this case, the rolling may start at an end portion 122 of the first composite layer 120 and end at a start portion 121 of the first composite layer 120. In some embodiments, an electrode composite may be applied to the second surface 112 of the substrate 110, followed by drying, and then a rolling process may be performed to flatten the second composite layer 130. In this case, the rolling may start at an end portion 132 of the second composite layer 130 and end at a start portion 131 of the second composite layer 130. In an embodiment where the substrate 110 is wound to form an electrode assembly, the start portion 131 of the second composite layer 130 may be disposed at the center and the end portion 132 of the second composite layer 130 may be disposed in the periphery.

In an embodiment, in the process of forming the first composite layer 120 on the substrate 110, applying the electrode composite to the second surface 112 of the substrate 110, and drying the electrode composite, followed by rolling, a maximum or substantially maximum shear stress (collectively referenced as maximum shear stress) may be applied to a region R of the second composite layer 130 proximate to the end portion 132 of the second composite layer 130. In some embodiments, substantially maximum sheer stress may include sheer strength that is greater than a threshold shear stress. The region R to which the maximum shear stress is applied may be a region where the second composite layer 130 is damaged and a fatigue failure may occur first. In some embodiments, the electrodes may repeatedly contract and expand during the life cycle of the secondary battery, and fatigue failure may occur (e.g., rapidly occur) in the region R where the maximum shear stress is applied to the second composite layer 130, which may lead to a reduction of the life of the secondary battery.

In an embodiment of the present disclosure, the reinforcing film 140 may be attached to the region R of the second composite layer 130 where the maximum shear stress is applied, aiding in the distribution of applied load. The use of the reinforcing film 140 in this manner may delay a time point at which fatigue failure occurs. In some embodiments, the reinforcing film 140 may be attached to the end portion 132 of the second composite layer 130 and to the second uncoated portion 112a.

In an embodiment, after the electrode composite is applied to the second surface 112 of the substrate 110 and dried, the reinforcing film 140 may be attached to the composite layer. In a state where the reinforcing film 140 is attached, the rolling process may be performed. In this case, the load applied by the rolling may be distributed by the reinforcing film 140 to prevent or reduce the load from being concentrated in a particular region.

In one embodiment, after the electrode composite is applied and dried and the rolling process is performed, the reinforcing film 140 may be applied to the second surface 112 of the substrate 110. According to this embodiment, the reinforcing film 140 attached to the region R where the maximum shear stress is applied may distribute tensile load that occurs as the electrode expands during the life cycle.

Referring to FIG. 4, the reinforcing film 140 may include a first portion 140a covering a region from the end portion 132 of the second composite layer 130 to a portion of the second composite layer 130 and a second portion 140b covering a region from the end portion 132 of the second composite layer 130 to a portion of the second uncoated portion 112a. In other words, the first portion 140a of the reinforcing film 140 may be attached to the second composite layer 130, and the second portion 140b may be attached to the second uncoated portion 112a.

In some embodiments, the length of the first portion 140a of the reinforcing film 140 may be greater than the length D from the end portion 132 of the second composite layer 130 to the region R on the second composite layer 130 where the maximum shear stress is applied during the rolling of the second composite layer 130. In other words, the first portion 140a may be formed in a length such that the first portion 140a may cover the entirety or substantially the entirety of the region R starting from the end portion 132 of the second composite layer 130 where the maximum shear stress is applied. The region R on the second composite layer 130 where the maximum shear stress is applied may be a region where fatigue failure occurs first in the second composite layer 130. The region where fatigue failure occurs first may differ from the region R where the maximum shear stress is applied, depending on the situation of use. In this case, the reinforcing film 140 may be attached to each region.

In an embodiment, the distance D from the end portion 132 of the second composite layer 130 to the region R on the second composite layer 130 where the maximum shear stress is applied may be in a range from approximately 0.2 mm to approximately 0.5 mm. In this case, the first portion 140a of the reinforcing film 140 may be formed in a length of a range from approximately 0.6 to approximately 2.0 mm from the end portion 132 of the second composite layer 130 to cover the distance D to the region R where the maximum shear stress is applied. The length of the first portion 140a of the reinforcing film 140 is not limited thereto, and may vary according to the region R where the maximum shear stress is applied or the region where fatigue failure may occur first.

The reinforcing film 140 may be formed in a thickness in a range from approximately 15 µm to approximately 50 µm. If the reinforcing film 140 is formed in a thickness of less than 15 µm, the strength reinforced by the reinforcing film 140 may be too small or insignificant, and the effect of distributing the applied load may not be expected. If the reinforcing film 140 is formed in a thickness greater than 50 µm, the gap between the electrodes caused by the reinforcing film 140 may be increased, and may reduce the charging capacity. The thickness of the reinforcing film 140 is not limited thereto, and may vary according to the size of the substrate, the thickness of the composite layer, and the like.

In some embodiments, the width of the reinforcing film 140 may be set to be equal to or less than the width of the substrate 110. For example, if the second composite layer 130 is coated in a width equal to the width of the substrate 110, the reinforcing film 140 may be formed to have a width equal or substantially equal to the width of the substrate 110 so as to cover the second composite layer 130 in the width direction. In another example, if the second composite layer 130 is coated in a width smaller than the width of the substrate 110, the width of the reinforcing film 140 may be set to be smaller than the width of the substrate 110. Even in the case where the width of the reinforcing film 140 is formed smaller than the width of the substrate 110, the reinforcing film 140 may be formed in a width equal or substantially equal to the width of the second composite layer 130 so as to cover the second composite layer 130 in the width direction. Accordingly, the width of the reinforcing film 140 may be any size as long as the reinforcing film 140 may cover the second composite layer 130.

In an embodiment, referring to FIG. 5, the reinforcing film 140 may include a thermal fusion film 141, and may be attached by heating and pressing. The thermal fusion film 141 may be formed of a thermoplastic polymer material. Accordingly, in the process of rolling the second composite layer 130, the thermal fusion film 141 may be attached together with the second composite layer 130 by heating and pressing. The thermal fusion film 141 may be attached by separately heating and pressing the same after the second composite layer 130 is rolled.

In one embodiment, referring to FIG. 5, the reinforcing film 140 may include a heat-resistant film 142a having an adhesive layer 142b. In this case, the reinforcing film 140 may be attached to the second composite layer 130 by the adhesive layer 142b. The reinforcing film 140 is not limited to the thermal fusion film 141 or the heat-resistant film 142a, but may be implemented as any film that may be attached to the second composite layer 130 to distribute applied load while reinforcing the strength.

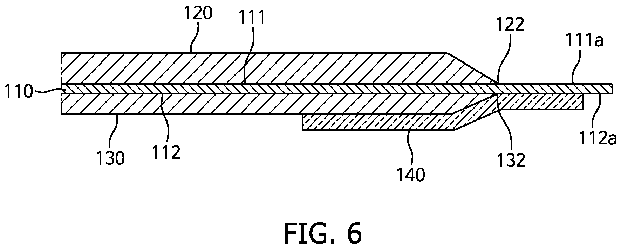

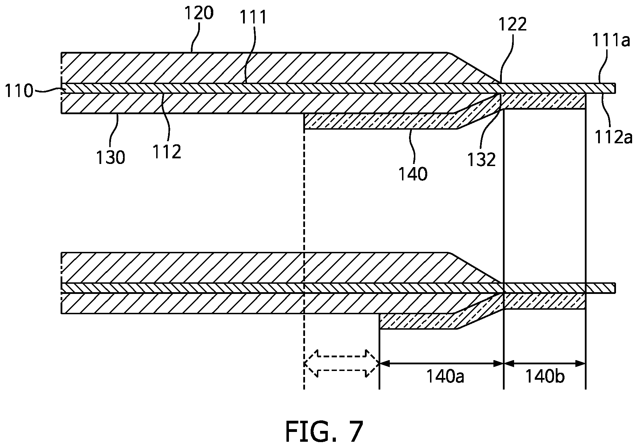

FIG. 6 illustrates an example of an electrode according to some embodiments of the present disclosure, and FIG. 7 illustrates an example in which a reinforcing film is attached to an electrode according to some embodiments of the present disclosure.

Referring to FIGS. 6 and 7, the electrode according to one embodiment may be configured such that the length of the second uncoated portion 112a in the longitudinal direction of the substrate 110 is equal to the length of the first uncoated portion 111a. In other words, the end portion 122 of the first composite layer 120 formed on the first surface 111 of the substrate 110 and the end portion 132 of the second composite layer 130 formed on the second surface 112 of the substrate 110 may be configured to face each other with respect to the substrate 110.

The reinforcing film 140 may be attached to the end portion 132 of the second composite layer 130 and the second uncoated portion 112a. In this case, the reinforcing film 140 may also be attached to a region of the second composite layer 130 where the maximum shear stress is applied or where fatigue failure occurs first in order to distribute the applied load.

In an embodiment, the reinforcing film 140 may include a first portion 140a covering a region from the end portion 132 of the second composite layer 130 to a portion of the second composite layer 130 and a second portion 140b covering a region from the end portion 132 of the second composite layer 130 to a portion of the second uncoated portion 112a. In other words, the first portion 140a of the reinforcing film 140 may be attached to the second composite layer 130, and the second portion 140b may be attached to the second uncoated portion 112a.

In some embodiments, the second surface 112 of the substrate 110 may include a chargeable/dischargeable region (hereinafter, referred to as the "chargeable region") and a non-chargeable/non-dischargeable region (hereinafter, referred to as the "non-chargeable region"). In this case, the length of the reinforcing film 140 may be set to cover the non-chargeable region excluding the chargeable region. In other words, as shown in FIG. 7, by configuring the first portion 140a of the reinforcing film 140 attached to the second composite layer 130 to be relatively long, the non-chargeable region may be expanded. In contrast, by configuring the first portion 140a of the reinforcing film 140 attached to the second composite layer 130 to be relatively short, the non-chargeable area may be reduced. Accordingly, if the chargeable region is insufficient, the length of the reinforcing film 140 attached to the second composite layer 130 may be optimized, and if the chargeable region is sufficient, the length of the reinforcing film 140 may be set to be relatively long.

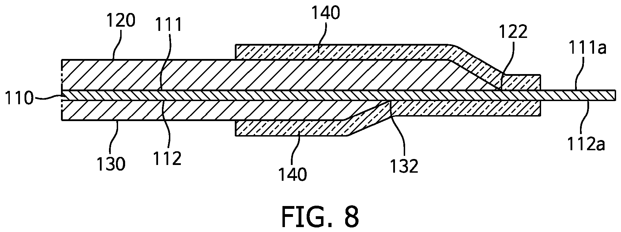

FIG. 8 illustrates an example in which reinforcing films are attached to opposite surfaces of an electrode according to embodiments of the present disclosure.

Referring to FIG. 8, in the electrode according to embodiments of the present disclosure, the reinforcing films 140 may be attached to both the end portion 122 of the first composite layer 120 formed on the first surface 111 of the substrate 110 and the end portion 132 of the second composite layer 130 formed on the second surface 112 of the substrate 110. In some embodiments, the length of the first composite layer 120 may be greater than the length of the second composite layer 130. In other words, the length of the second uncoated portion 112a in the longitudinal direction of the substrate 110 may be greater than the length of the first uncoated portion 111a in the longitudinal direction of the substrate 110. One of the reinforcing films 140 may be attached to cover the end portion 122 of the first composite layer 120 and the first uncoated portion 111a, and the other of the reinforcing films 140 may be attached to cover the end portion 132 of the second composite layer 130 and the second uncoated portion 112a. The reinforcing film 140 attached to the first composite layer 120 and the reinforcing film 140 attached to the second composite layer 130 may be configured to have the same length. In another example, the reinforcing film 140 attached to the second composite layer 130 may be configured to be longer.

Although not shown in the figures, the reinforcing films 140 may also be attached to opposite surfaces of the substrate 110, in which as shown in FIG. 6, the first uncoated portion 111a and the second uncoated portion 112a have the same length in the longitudinal direction of the substrate 110. In other words, the end portion 122 of the first composite layer 120 formed on the first surface 111 of the substrate 110 and the end portion 132 of the second composite layer 130 formed on the second surface 112 of the substrate 110 may be configured to face each other with respect to the substrate 110. In this case, the reinforcing film 140 may be attached to cover the end portion 122 of the first composite layer 120 and the first uncoated portion 111a, and the reinforcing film 140 may be attached to cover the end portion 132 of the second composite layer 130 and the second uncoated portion 112a. In some embodiments, the reinforcing film 140 attached to the first composite layer 120 and the reinforcing film 140 attached to the second composite layer 130 may be configured to have the same length. In another example, the reinforcing film 140 attached to the second composite layer 130 may be configured to be longer.

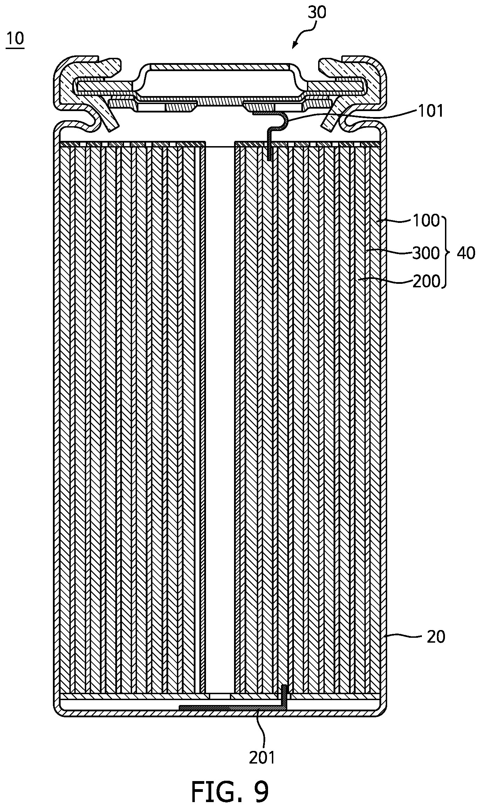

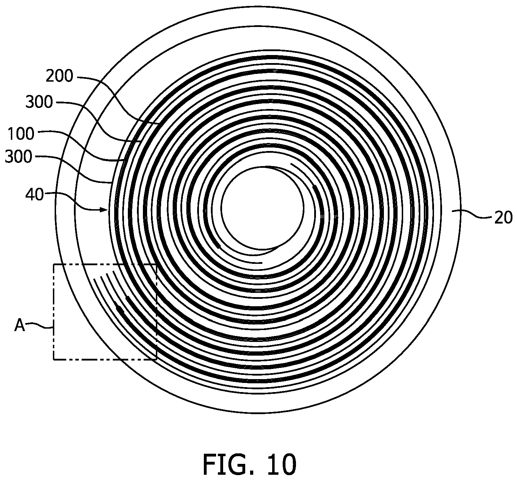

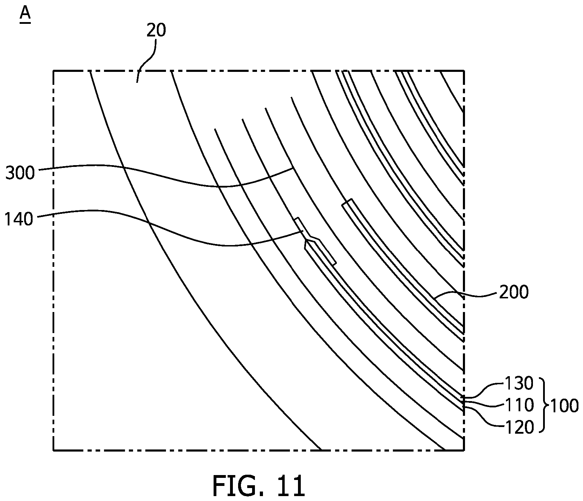

FIG. 9 illustrates a vertical cross-sectional view of an example secondary battery according to embodiments of the present disclosure, FIG. 10 illustrates a horizontal cross-sectional view of the example secondary battery according to embodiments of the present disclosure, and FIG. 11 illustrates an enlarged view of an example region A in FIG. 10 according to embodiments of the present disclosure.

Referring to FIGS. 9 through 11, a secondary battery 10 according to embodiments of the present disclosure may include: an electrode assembly 40 including a first electrode 100, a separator 300, and a second electrode 200; a case 20 accommodating the electrode assembly 40 therein; and a cap assembly 30 coupled to an open area of the case 20 to seal the case 20.

The electrode assembly 40 may include the separator 300 and the first electrode 100 and the second electrode 200 positioned with the separator 300 interposed therebetween and may be wound in a jelly-roll shape.

The first electrode 100 includes a first substrate and a first active material layer on the first substrate. A first lead tab 101 may extend outwardly from a first uncoated portion of the first substrate at where the first active material layer is not located, and the first lead tab 101 may be electrically connected to the cap assembly 30.

The second electrode 200 includes a second substrate and a second active material layer on the second substrate. A second lead tab 201 may extend outwardly from a second uncoated portion of the second substrate at where the second active material layer is not located, and the second lead tab 201 may be electrically connected to the case 20. The first lead tab 101 and the second lead tab 201 may extend in opposite directions.

The first electrode 100 may act as a positive electrode. In such an embodiment, the first substrate may be made of, for example, an aluminum foil, and the first active material layer may include, for example, a transition metal oxide. The second electrode 200 may act as a negative electrode. In such an embodiment, the second substrate may be made of, for example, a copper foil or a nickel foil, and the second active material layer may include graphite, for example.

The separator 300 prevents a short circuit between the first electrode 100 and the second electrode 200 while allowing movement of lithium ions therebetween. The separator 300 may be made of, for example, a polyethylene film, a polypropylene film, a polyethylene-polypropylene film, or the like.

The case 20 accommodates the electrode assembly 40 and, together with the cap assembly 30, forms the external appearance of the secondary battery. The case 20 may have a substantially cylindrical body portion and a bottom portion connected to one side (e.g., to one end) of the body portion. The case 20 may be made of a metal, such as aluminum, aluminum alloy, or nickel-plated steel, a laminated film, or plastic (e.g., in a pouch-type embodiment). The second lead tab 201 may be attached to the bottom of the case 20 to be electrically connected thereto. In some embodiments, the active material layer may be a composite layer.

In an embodiment, the first electrode 100 may include a substrate 110 made of a metallic material, a first composite layer 120 coated on a portion of a first surface of the substrate 110 to form a first uncoated portion on an end of the first surface of the substrate 110, a second composite layer 130 coated on a portion of a second surface of the substrate 110 to form a second uncoated portion on an end of the second surface of the substrate 110, and a reinforcing film 140 attached to the end portion of at least one of the first composite layer 120 or the second composite layer 130. In some embodiments, the region of the composite layer to which the reinforcing film is attached and the thickness, size, and material of the reinforcing film are the same as described above with reference to FIGS. 1 to 8, and therefore detailed description thereof is omitted.

In an embodiment, as shown in FIG. 11, the reinforcing film 140 may be attached to the first electrode 100, such as, for example, to the end portion of the second composite layer 130 and the second uncoated portion. In some embodiments, the second composite layer 130 may be disposed or positioned to face the second electrode 200 with the separator 300 provided therebetween. In this case, in a state where the first electrode 100 is wound, the start portions of the first composite layer 120 and the second composite layer 130 may be disposed or positioned at the center of the first electrode 100, and the end portions of the first composite layer 120 and the second composite layer 130 may be disposed or positioned at radially outer positions of the first electrode 100. Accordingly, the reinforcing film 140 attached to the end portion of the second composite layer 130 may be disposed or positioned at the outer position in the radial direction in a state where the first electrode 100 is wound.

In some embodiments, the non-chargeable region may be adjusted by adjusting the length of the reinforcing film 140 attached to the end portion of the second composite layer 130. In other words, the region where the composite layer of the first electrode 100 and the composite layer of the second electrode 200 face each other may form the chargeable region, and the remaining region may form the non-chargeable region. The non-chargeable region may be formed by attaching the reinforcing film 140 to the second composite layer 130 of the first electrode 100 facing the second electrode 200. Accordingly, the length of the reinforcing film 140 attached to the second composite layer 130 may be optimized if the chargeable region is insufficient, and the length of the reinforcing film 140 may be set to be relatively long if the chargeable region is sufficient.

In an embodiment, the first composite layer 120 and the second composite layer 130 include a positive electrode active material, and the substrate 110 is implemented as a positive electrode substrate, wherein the first electrode 100 may function as a positive electrode. In other words, the positive electrode has a relatively lower strength compared to the negative electrode, and therefore may crack before the negative electrode. Accordingly, the reinforcing film 140 may be attached to the first electrode 100 functioning as a positive electrode.

In some embodiments, in the process of manufacturing the first electrode 100, the first composite layer 120 may be coated on the first surface of the substrate 110 and then the second composite layer 130 may be coated on the second surface. In this case, a region in which a maximum shear stress is applied may be formed in the second composite layer 130, and the reinforcing film 140 may be attached to the second composite layer 130.

In some embodiments, it is desirable for the reinforcing film 140 to be attached (e.g., be only attached) to the second composite layer 130 in view of an increase in the thickness due to the attachment of the reinforcing film 140. However, this is not intended to be limiting, the reinforcing films 140 may be attached to opposite surfaces of the first electrode 100 and the second electrode 200 as required or desired, and the reinforcing film 140 may also be attached to the second electrode 200.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiaA1-bXbO2-cDc (0.90≤a≤1.8, 0≤b≤0.5, 0≤c≤0.05); LiaMn2-bXbO4-cDc (0.90≤a≤1.8, 0≤b≤0.5, 0≤c≤0.05); LiaNi1-b-cCobXcO2-αDα (0.90≤a≤1.8, 0≤b≤0.5, 0≤c≤0.5, 0<α<2); LiaNi1-b-cMnbXcO2-αDα (0.90≤a≤1.8, 0≤b≤0.5, 0≤c≤0.5, 0<α<2); LiaNibCocL1dGeO2 (0.90≤a≤1.8, 0≤b≤0.9, 0≤c≤0.5, 0≤d≤0.5, 0≤e≤0.1); LiaNiGbO2 (0.90≤a≤1.8, 0.001≤b≤0.1); LiaCoGbO2 (0.90≤a≤1.8, 0.001≤b≤0.1); LiaMn1-bGbO2 (0.90≤a≤1.8, 0.001≤b≤0.1); LiaMn2GbO4 (0.90≤a≤1.8, 0.001≤b≤0.1); LiaMn1-gGgPO4 (0.90≤a≤1.8, 0≤g≤0.5); Li(3-f)Fe2(PO4)3 (0≤f≤2); and LiaFePO4 (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOx (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based heavy antibody or a (meth)acrylic polymer.

The inorganic material may include inorganic particles selected from Al2O3, SiO2, TiO2, SnO2, CeO2, MgO, NiO, CaO, GaO, ZnO, ZrO2, Y2O3, SrTiO3, BaTiO3, Mg(OH)2, boehmite, and combinations thereof but is not limited thereto.

The organic material and the inorganic material may be mixed in one coating layer or may be in the form of a coating layer containing an organic material and a coating layer containing an inorganic material that are laminated on each other.

Although the present disclosure has been described with reference to embodiments and drawings illustrating aspects thereof, the present disclosure is not limited thereto. Various modifications and variations can be made by a person skilled in the art to which the present disclosure belongs within the scope of the technical spirit of the present disclosure and the claims and their equivalents, below.

## Claims

1. An electrode (100) comprising:
a substrate (110) made of a metallic material;
a first composite layer (120) coated on a portion of a first surface (111) of the substrate (110) to form a first uncoated portion (111a) on a first end of the first surface (111);
a second composite layer (130) coated on a portion of a second surface (112) of the substrate (110) to form a second uncoated portion (112a) on a second end of the second surface (112); and
a reinforcing film (140) attached to a third end portion (132) of at least one of the first composite layer (120) or the second composite layer (130).

2. The electrode as claimed in claim 1, wherein a first length of the first composite layer (120) is greater than a second length of the second composite layer (130), and the reinforcing film (140) is attached to the third end portion (132) of the second composite layer (130) and the second uncoated portion (112a).

3. The electrode as claimed in claim 2, wherein the reinforcing film (140) comprises:
a first portion (140a) covering a first region from the third end portion (132) of the second composite layer (130) to a portion of the second composite layer (130); and
a second portion (140b) covering a second region from the third end portion (132) of the second composite layer (130) to a portion of the second uncoated portion (112a).

4. The electrode as claimed in claim 3, wherein a third length of the first portion (140a) is greater than a fourth length from the third end portion (132) of the second composite layer (130) to a point (R) of the second composite layer (130) to which sheer stress greater than a threshold sheer stress is applied during rolling of the second composite layer (130).

5. The electrode as claimed in claim 3, wherein a third length of the first portion (140a) is greater than a fourth length from the third end portion (132) of the second composite layer (130) to a point of the second composite layer (130) where a fatigue failure occurs first.

6. The electrode as claimed in claim 3, wherein a third length of the first portion (140a) is in a range from 0.6 mm to 2.0 mm from the end portion (132) of the second composite layer (130).

7. The electrode as claimed in claim 3, wherein the second surface (112) of the substrate (110) comprises a chargeable region and non-chargeable region, and
a third length of the reinforcing film (140) is set to cover the non-chargeable region excluding the chargeable region.

8. The electrode as claimed in any one of the preceding claims, wherein a thickness of the reinforcing film (140) ranges from 15 µm to 50 µm.

9. The electrode as claimed in any one of the preceding claims, wherein a width of the reinforcing film (140) is equal to or smaller than a width of the substrate (110).

10. The electrode as claimed in any one of the preceding claims, wherein the reinforcing film (140) comprises a thermal fusion film (141), and is attached via heat and pressure.

11. The electrode as claimed in any one of claims 1 to 10, wherein the reinforcing film (140) comprises a heat-resistant film (142a) comprising an adhesive layer (142b), and is attached by the adhesive layer.

12. The electrode as claimed in claim 2, wherein the second composite layer (130) is coated on the second surface (112) of the substrate (110) after the first composite layer (120) is coated on first surface (111) of the substrate (110).

13. The electrode as claimed in claim 2, wherein a third length of the second uncoated portion (112a) in a longitudinal direction of the substrate (110) is greater than a fourth length of the first uncoated portion (111a) in the longitudinal direction of the substrate (110).

14. The electrode as claimed in claim 2, wherein a third length of the second uncoated portion (112a) in a longitudinal direction of the substrate (110) is equal to a fourth length of the first uncoated portion (111a) in the longitudinal direction of the substrate (110).

15. A secondary battery (10) comprising:
an electrode assembly (40) comprising a first electrode (100) as defined in any one of the preceding claims, a separator (300), and a second electrode (200);
a case (20) configured to accommodate the electrode assembly (40); and
a cap assembly (30) coupled to an open area of the case (20) to seal the case (20).
